Europäisches Patentamt

European Patent Office

Office européen des brevets

(19)

(11) Veröffentlichungsnummer: **0 200 864**
**A2**

# (12) EUROPÄISCHE PATENTANMELDUNG

(21) Anmeldenummer: **86102627.6**

(22) Anmeldetag: **28.02.86**

(51) Int. Cl.⁴: **H01L 41/08**

(30) Priorität: **07.05.85 DE 3516324**

(43) Veröffentlichungstag der Anmeldung:
**17.12.86 Patentblatt 86/46**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Lange, Jürgen, Dr.**
**Im Burgunder 15**
**D-6236 Eschborn 2(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Linearmotor.**

(57) Bei einem Linearmotor mit einem Läufer und einem Stator umfaßt der Läufer zwei Läuferelemente, welche einzeln in Abhängigkeit von je einem zugeführten Signal im Stator mit Hilfe von Klemmelementen klemmbar sind und welche durch mindestens ein piezoelektrisches Element - (Aktuatorelement) verbunden sind, mit dem in Abhängigkeit von einem zugeführten Steuersignal der Abstand der Läuferelemente zueinander veränderbar ist. Durch Anlegen einer elektrischen Spannung erfolgt jeweils eine Ausdehnung der Klemmelemente quer zur Bewegungsrichtung und eine Ausdehnung des Aktuatorelements in Bewegungsrichtung. Eine besonders vorteilhafte Ausgestaltung besteht darin, daß der Läufer plattenförmig ausgebildet ist, daß die Läuferelemente in einer rahmenförmigen Halterung die Klemmelemente enthalten und daß mindestens eine Seite der rahmenförmigen Halterung gegenüber den anderen Seiten beweglich ist.

Fig.1

EP 0 200 864 A2

Rank Xerox

# Linearmotor

Die Erfindung bezieht sich auf einen Linearmotor mit einem Läufer und einem Stator.

Bei Steuer-und Regelanlagen werden Stellglieder benötigt, bei denen pro Zeiteinheit ein bestimmter linearer Weg zurückgelegt wird. Bekannte Stellglieder verwenden meist pneumatische oder elektromagnetische Antriebselemente. Bei elektrischen Antriebselementen -abgesehen von solchen, welche einen relativ kurzen Weg zurücklegen, also Hubmagnete und dergleichen -wird die Drehbewegung von Motoren im allgemeinen über Zahnräder oder Seilscheiben in einen linearen Verfahrweg umgewandelt. Für mittlere und große Stellkräfte werden derartige Stellglieder sehr groß und vor allem sehr schwer. Nachteilig ist bei derartigen elektromagnetischen Antriebselementen der hohe Strombedarf und die damit verbundene Eigenerwärmung. Werden derartige elektromagnetische Antriebselemente mit Hilfe von Halbleiterschaltelementen gesteuert, so ergeben sich zusätzlich Probleme durch die Verlustleistung in diesen Halbleiterschaltelementen.

Die hohe Eigenerwärmung stört insbesondere dort, wo bereits hohe Umgebungstemperaturen auftreten -wie beispielsweise im Motorraum eines Kraftfahrzeugs. Aufgabe der vorliegenden Erfindung ist es, einen Linearmotor anzugeben, welcher die vorerwähnten Nachteile nicht aufweist.

Diese Aufgabe wird erfindungsgemäß dadurch gelöst, daß der Läufer zwei Läuferelemente umfaßt, welche einzeln in Abhängigkeit von je einem zugeführten Signal im Stator klemmbar sind und welche durch mindestens ein piezoelektrisches Element verbunden sind, mit dem in Abhängigkeit von einem zugeführten Steuersignal der Abstand der Läuferelemente zueinander veränderbar ist.

Der erfindungsgemäße Linearmotor hat den Vorteil des geringen Leistungsbedarfs in Ruhestellung und des geringen Gewichts. Als weiterer Vorteil ist anzusehen, daß die lineare Bewegung direkt erzeugt wird, also keine dem Verschleiß unterworfene Getriebeteile erforderlich sind. Außerdem ist die Geschwindigkeit und die Positionierung des Linearmotors in einfacher Weise elektronisch steuerbar.

Viele der eingangs erwähnten Stellglieder erfordern Freilaufeigenschaften. Darunter soll hier verstanden werden, daß das linear wirkende Antriebselement mechanisch von der Abtriebsseite her bewegbar ist, was beispielsweise bei einem Motor mit einem Schneckentrieb durch die bekannte Selbsthemmung der Schnecke nicht der Fall ist. Der erfindungsgemäße Linearmotor bietet den Vorteil der Freilaufeigenschaft in äußerst einfacher Weise. Durch eine entsprechende Schaltung kann er wahlweise freibeweglich oder in der jeweiligen Position arretierbar sein.

Durch die in den Unteransprüchen aufgeführten Maßnahmen sind vorteilhafte Weiterbildungen und Verbesserungen des im Hauptanspruch angegebenen Linearmotors möglich. Besonders vorteilhaft ist die plattenförmige Ausgestaltung des Läufers, was zu einer kompakten Bauweise des Linearmotors führt.

Ein Ausführungsbeispiel der Erfindung ist in der Zeichnung an Hand mehrerer Figuren dargestellt und in der nachfolgenden Beschreibung näher erläutert. Es zeigt:

Fig. 1 eine teilweise aufgeschnittene perspektivische Darstellung des Ausführungsbeispiels,

Fig. 2 ein Schaltbild einer Steuerschaltung und

Fig. 3 eine schematische Darstellung des Läufers und der Klemmelemente zur Veranschaulichung der einzelnen Phasen des Bewegungsvorganges.

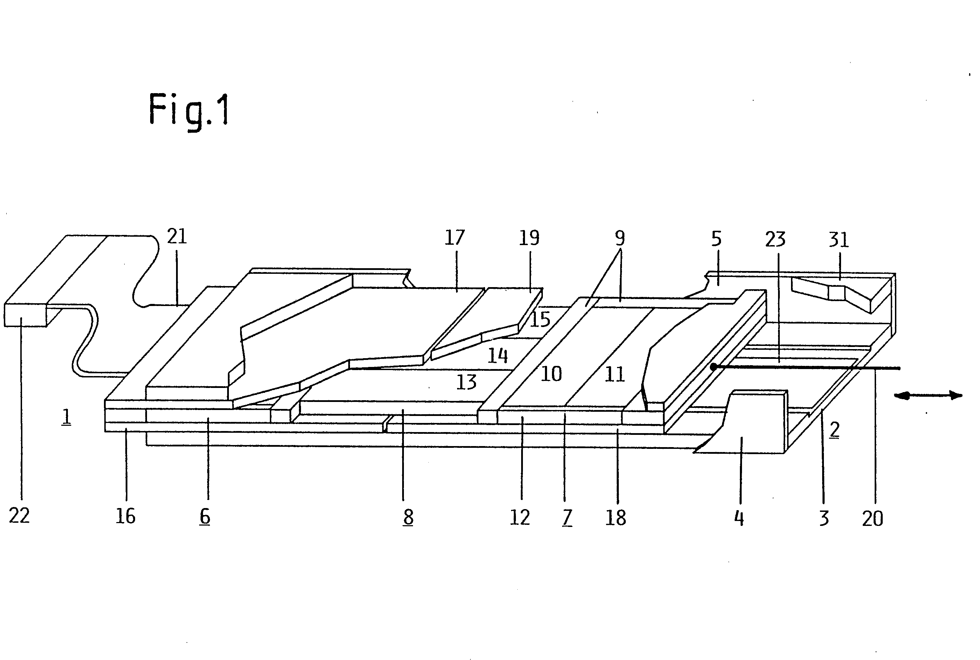

Der Läufer 1 des in Fig. 1 dargestellten Linearmotors ist in der durch Pfeile gekennzeichneten Richtung im Stator 2 beweglich angeordnet. Der Stator 2 besteht aus zwei Platten 3, 31 und zwei den Motor seitlich begrenzenden Seitenwänden 4, 5.

Der Läufer 1 besteht aus zwei Klemmelementen 6, 7 und einem dazwischen angeordneten Aktuatorelement 8. Jedes der Klemmelemente 6, 7 wird von einer rahmenförmigen Halterung 9 gebildet, in welche die piezoelektrischen Elemente 10, 11 eingebettet sind. Durch Anlegen einer elektrischen Spannung an die nicht dargestellten Elektroden der piezoelektrischen Elemente 10, 11 wird deren Längenausdehnung quer zur Bewegungsrichtung vergrößert, so daß sich die Druckleiste 12 nach vorne bewegt. Dadurch wird das Klemmelement 6, 7 zwischen die beiden Seitenwände 4, 5 des Stators 2 geklemmt.

Das Aktuatorelement 8 besteht bei dem gezeigten Ausführungsbeispiel aus drei piezoelektrischen Elementen 13, 14, 15, welche sich bei Anlegen einer elektrischen Spannung an die nicht dargestellten Elektroden in Bewegungsrichtung ausdehnen. An den Enden sind die piezoelektrischen Elemente 13, 14 und 15 fest mit der jeweiligen Halterung 9 des Klemmelements 6 bzw. 7 verbunden. Dieses kann vorzugsweise durch entsprechende Klebung erfolgen.

Um ein einwandfreies Gleiten des Läufers innerhalb des Stators zu ermöglichen und außerdem die piezoelektrischen Elemente vor Umwelteinflüssen zu schützen, liegen die Elemente 6, 7, 8 zwischen Platten 16, 17, 18 und 19. Um die von dem Aktuatorelement 8 verursachte Längenausdehnung des Läufers nicht zu behindern, ist jeweils zwischen den Platten 16 und 18 bzw. 17 und 19 ein Spalt vorgesehen, welcher mit elatischem Material verschlossen ist. An dem Läufer 1 kann ein Bowdenzug oder ein Gestänge angeschlossen sein, das in Fig. 1 lediglich - schematisch dargestellt ist. Als Werkstoff für den Stator 2, die Halterung 9 und die Platten 16, 17, 18 und 19 kann Stahl in vorteilhafter Weise verwendet werden.

Die im einzelnen nicht dargestellten elektrischen Leitungen zu den Elektroden der piezoelektrischen Elemente sind in einem Flachbandkabel 21 mit einem Stecker 22 zusammengefaßt.

Zur elektrischen Erfassung der jeweiligen Position des Läufers 1 ist bei dem Linearmotor nach Fig. 1 in einer Vertiefung der Platte 3 des Stators 2 eine Widerstandsbahn 23 isoliert angeordnet. Beaufschlagt man diese an den Enden mit einer elektrischen Spannung, so kann an einem am Läufer angeordneten Schleifer eine der Läuferposition proportionale Spannung abgenommen werden. Es sind im Zusammenhang mit dem erfindungsgemäßen Linearmotor auch andere Positionssensoren, wie beispielsweise magnetisch oder optisch abtastbare Raster, anwendbar.

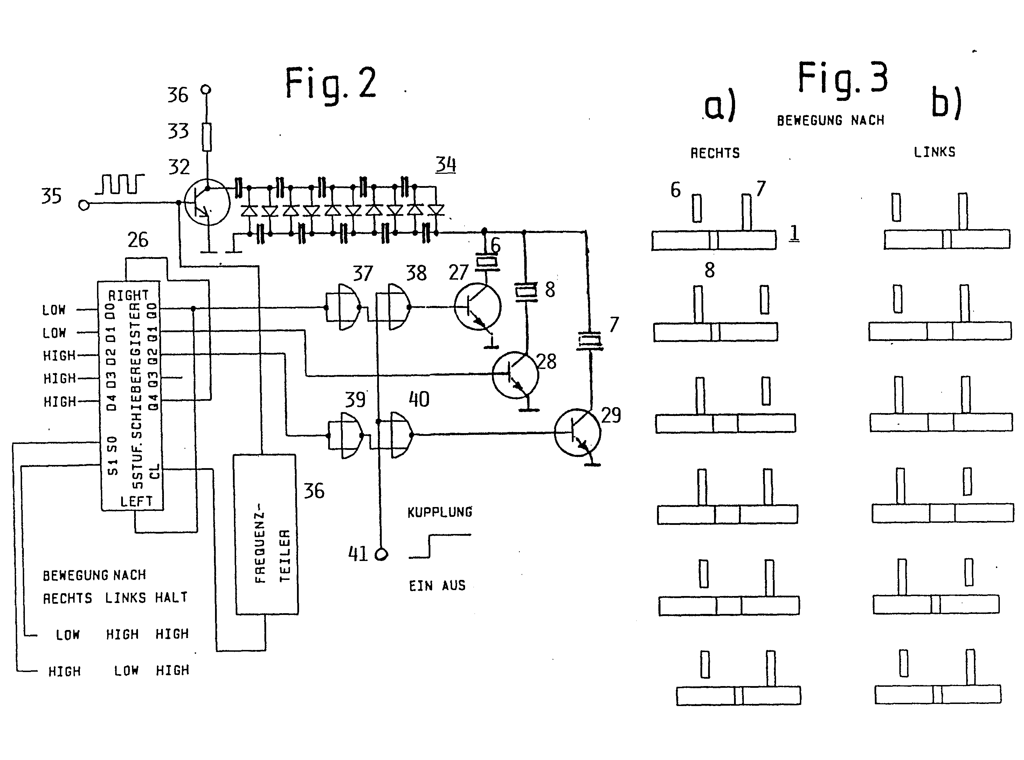

Nachdem an Hand von Fig. 1 der mechanische Aufbau beschrieben wurde, wird an Hand der Figuren 2 und 3 die Funktion des erfindungsgemäßen Linearmotors erläutert. Fig. 2 stellt ein Beispiel für eine Steuerschaltung für einen erfindungsgemäßen Linearmotor dar. Sie besteht im wesentlichen aus einem Schieberegister 26 mit dessen Hilfe die über die Endstufen 27, 28, 29 an Ausgänge des Schieberegisters 26 angeschlossenen Klemmelemente 6, 7 und das Aktuatorelement 8 in einer jeweils vorgegebenen Reihenfolge angesteuert werden. Die Endstufen sind in Fig. 2 lediglich als einfache Schalttransistoren dargestellt. Es ist jedoch die Ausführung der Endstufen im einzelnen -insbesondere die Anpassung der Endstufen an die kapazitive Last im Rahmen des Fahmännischen möglich.

Da die piezoelektrischen Elemente bei dem Ausführungsbeispiel eine Spannung von etwa 100 Volt benötigen, die gesamte Anordnung jedoch für den Betrieb bei niedrigeren Spannungen vorgesehen ist, wird aus der bei 30 zugeführten Batteriespannung mit Hilfe eines Schalttransistors 32, dessen Kollektor über einen Widerstand 33 mit der Betriebsspannungsquelle verbunden ist, und einer Gleichrichterkaskade 34 eine entsprechend hohe Spannung gewonnen. Dazu wird der Transistor über den Eingang 35 der Schaltungsanordnung mit Rechteckimpulsen angesteuert.

Durch die entsprechende Beschaltung des Schieberegisters 26 wird nun die im Zusammenhang mit Fig. 3 dargestellte Folge der Ansteuerung der piezoelektrischen Elemente erreicht. Und zwar sind in Fig. 3a schematisch die Klemmelemente 6 und 7 sowie der Läufer 1 mit dem Aktuatorelement 8 für verschiedene Bewegungsphasen bei einer Bewegung nach rechts und in Fig. 3b bei einer Bewegung nach links dargestellt.

Während der ersten Phase wird das Klemmelement 7 aktiviert, klemmt also. In der zweiten Phase, die sozusagen als Vorbereitung für den Rechtslauf dient, wird das Klemmelement 6 aktiviert, während sich das Klemmelement 7 in Ruhestellung befindet. In der dritten Phase wird das Aktuatorelement 8 aktiviert, so daß sich der Läufer 1 ausdehnt.Daraufhin wird in der folgenden Phase das Klemmelement 7 aktiviert, so daß der rechte Teil des Läufers geklemmt wird. Daraufhin wird in der nächsten Phase das Klemmelement 6 deaktiviert und schließlich in der letzten dargestellten Phase das Aktuatorelement 8 deaktiviert, so daß sich der Läufer wieder in der ursprünglichen Länge, jedoch um einen Schritt weiter nach rechts befindet. Da die piezoelektrischen Elemente äußerst schnell der angelegten Spannung folgen, kann der dargestellte Schritt innerhalb kurzer Zeit, beispielsweise in ca. 100 Mikrosekunden erfolgen.

Bei der in Fig. 3b dargestellten Bewegung nach links folgt die Steuerung der einzelnen piezoelektrischen Elemente in umgekehrter Reihenfolge wie bei der Bewegung nach rechts.

Bei der Steuerschaltung nach Fig. 2 wird der Takt zur Ansteuerung des Schieberegisters 26 mit Hilfe eines Frequenzteilers 36 aus der bei 35 zugeführten Rechteckspannung gewonnen. Die Eingänge D0 bis D4 sind zur Erzielung der im Zusammenhang mit Fig. 3 erläuterten Sequenz fest auf L bzw. H, wie in der Figur dargestellt, gelegt. Die Steuerung des Linearmotors bezüglich Links- und Rechtslauf sowie Halt wird durch entsprechende Belegung der Eingänge S0 und S1 nach der in der Figur gezeigten Tabelle ermöglicht.

In die Zuleitungen der Ausgänge des Schieberegisters 26 zu den Endstufen 27 und 29 für die Klemmelemente 6 und 7 sind jeweils zwei NOR-Gatter 37, 38, 39 und 40 eingefügt. Diese dienen dazu, ein bei 41 zugeführtes Steuersignal mit den vom Schieberegister erzeugten Signalen zu verknüpfen. Mit Hilfe des jeweils ersten NOR-Gatters 37, 39 wird lediglich eine Invertierung des Ausgangssignal des Schieberegisters erreicht, während das jeweils zweite Gatter 38 und 40 die Steuersignale des Schieberegisters nur weiterleitet, wenn bei 41 ein L-Pegel zugeführt wird. Ist dies nicht der Fall, wird also bei 41 ein H-Pegel angelegt, so entsteht an den Ausgängen der NOR-Gatter 38 und 40 unabhängig von dem vom Schieberegister 26 zugeführten Signal ein L-Pegel, wodurch die Endstufen 27, 29 in den nichtleitenden Zustand geschaltet werden. Beide Klemmelemente sind somit nicht aktiviert und der Läufer 1 kann sich frei innerhalb des Stators bewegen. Verglichen mit den bekannten elektromagnetischen Linearantrieben wirkt diese Schaltung wie eine Kupplung.

Wenn ein erfindungsgemäßer Linearmotor keine Bewegung ausführt, kann er wahlweise entweder frei beweglich oder blockiert sein. Die Umschaltung erfolgt mit einem bei 41 zugeführten elektrischen Signal. Ferner läßt sich der vom Läufer 1 mit jeweils einem Schritt zurückgelegte Weg durch Ändern der dem Aktuatorelement 8 zugeführten Spannung steuern.

Schließlich kann die Steuerschaltung mit dem Linearmotor, vorzugsweise mit dem Läufer, eine Baueinheit bilden. Dadurch wird erreicht, daß nur wenige -insbesondere keine höhere Spannungen führenden -Leitungen an den Linearmotor anzuschließen sind.

## Ansprüche

1. Linearmotor mit einem Läufer und einem Stator, dadurch gekennzeichnet, daß der Läufer (1) zwei Läuferelemente umfaßt, welche einzeln in Abhängigkeit von je einem zugeführten Signal im Stator klemmbar sind und welche durch mindestens ein piezoelektrisches Element - (Aktuatorelement) (8) verbunden sind, mit dem in Abhängigkeit von einem zugeführten Steuersignal der Abstand der Läuferelemente zueinander veränderbar ist.

2. Linearmotor nach Anspruch 1, dadurch gekennzeichnet, daß die Läuferelemente weitere piezoelektrische Elemente (Klemmelemente) (6, 7) enthalten.

3. Linearmotor nach Anspruch 2, dadurch gekennzeichnet, daß durch Anlegen einer elektrischen Spannung jeweils eine Ausdehnung der Klemmelemente (6, 7) quer zur Bewegungsrichtung und eine Ausdehnung des Aktuatorelements (8) in Bewegungsrichtung erfolgt.

4. Linearmotor nach Anspruch 1, dadurch gekennzeichnet, daß der Läufer (1) plattenförmig ausgebildet ist, daß die Läuferelemente in einer rahmenförmigen Halterung (9) die Klemmelemente (6, 7) enthalten und daß mindestens eine Seite (12) der rahmenförmigen Halterung gegenüber den anderen Seiten beweglich ist.

5. Linearmotor nach Anspruch 4, dadurch gekennzeichnet, daß die Aktuatorelemente (8; 13, 14, 15) an den rahmenförmigen Halterungen (9) -vorzugsweise durch Kleben -befestigt sind.

6. Linearmotor nach Anspruch 5, gekennzeichnet durch die Läuferelemente und die Aktuatorelemente (9; 13, 14, 15) beidseitig abdeckende Platten 16, 17, 18, 19, welche gleichzeitig als Gleitelemente dienen.

7. Linearmotor nach Anspruch 6, dadurch gekennzeichnet, daß je Läuferelement zwei Platten (16, 17; 18, 19) vorgesehen sind und daß zwischen den Platten des einen Läuferelements und den Platten des anderen Läuferelements je eine Fuge vorgesehen ist, die mit elastischem Material verschlossen ist.

8. Linearmotor nach einem der vorangehenden Ansprüche, dadurch gekennzeichnet, daß die piezoelektrischen Elemente (10, 11, 13, 14, 15) aus mehreren Einzelelementen schichtförmig unter Verwendung von weiteren Schichten aus faserverstärktem Kunststoff aufgebaut sind.

9. Linearmotor nach einem der vorangehenden Ansprüche, gekennzeichnet durch einen sich in Bewegungsrichtung erstreckenden Stator (2) mit rechteckigem Innenquerschnitt.

10. Linearmotor nach einem der vorangehenden Ansprüche, gekennzeichnet durch eine Steuerschaltung, welche die piezoelektrischen Elemente zur Bewegung des Läufers (1) um jeweils einen Schritt nach folgender Sequenz mit Spannung versorgt:

-Spannung des einen Klemmelements EIN,

-Spannung des anderen Klemmelements AUS,

-Spannung des Aktuatorelements EIN,

-Spannung des anderen Klemmelements EIN,

-Spannung des einen Klemmelements AUS,

-Spannung des Aktuatorelements AUS.

11. Linearmotor nach Anspruch 10, <u>dadurch ge-kennzeichnet</u>, daß die Steuerschaltung ein Schieberegister (26) und je eine Endstufe (27, 28, 29) für die Klemmelemente (6, 7) und das Aktuatorelement (8) umfaßt.

12. Linearmotor nach Anspruch 10, <u>dadurch ge-kennzeichnet</u>, daß die Steuerschaltung ferner eine Logikschaltung (37, 38, 39, 40) enthält, welcher ein Steuersignal derart zuführbar ist, daß beide Klemmelemente (6, 7) spannungslos sind.

13. Linearmotor nach Anspruch 10, <u>dadurch ge-kennzeichnet</u>, daß der jeweils mit einem Schritt zurückgelegte Weg des Läufers (1) mit Hilfe der dem Aktuatorelement (8) zugeführten Spannung steuerbar ist.

14. Linearmotor nach einem der vorangehenden Ansprüche, <u>gekennzeichnet</u> <u>durch</u> einen Positions-sensor -vorzugsweise eine am Stator angeordnete Widerstandsbahn (23) und einen am Läufer an-geordneten Schleifer.

# Fig.1

0 200 864

Fig. 3

a)   b)

BEWEGUNG NACH

RECHTS        LINKS

6  7  1  8

Fig. 2

34

7

8

6

27  28  29

38  37  39  40

KUPPLUNG

EIN AUS

36

FREQUENZ-TEILER

41

36  33  32

35

26

5STUF. SCHIEBEREGISTER

RIGHT  D4 D3 D2 D1 D0   D4 D3 D2 D1 D0  CL  LEFT

S1 S0

LOW
LOW
HIGH
HIGH
HIGH

BEWEGUNG NACH
RECHTS LINKS HALT

LOW  HIGH  HIGH
HIGH  LOW  HIGH